(19) Europäisches Patentamt
European Patent Office
Office européen des brevets

(11) **EP 1 684 142 B1**

(12) **EUROPÄISCHE PATENTSCHRIFT**

(45) Veröffentlichungstag und Bekanntmachung des Hinweises auf die Patenterteilung:
**14.10.2009  Patentblatt 2009/42**

(51) Int Cl.:
*G05D 1/02* *(2006.01)*   *B60K 31/00* *(2006.01)*

(21) Anmeldenummer: **06100169.9**

(22) Anmeldetag: **09.01.2006**

(54) **Verfahren zur Kursprädiktion und Abstandsregelung in Fahrerassistenzsystemen für Kraftfahrzeuge**

Method of predicting possible future course and distance control in driver assisting system

Procédé pour la prédiction du course future et du contrôle de la distance inter-véhicule dans un système d'assistance

(84) Benannte Vertragsstaaten:
**DE FR GB IT SE**

(30) Priorität: **20.01.2005  DE 102005002719**

(43) Veröffentlichungstag der Anmeldung:
**26.07.2006  Patentblatt 2006/30**

(73) Patentinhaber: **ROBERT BOSCH GMBH**
**70442 Stuttgart (DE)**

(72) Erfinder:
• **Klotz, Albrecht**
**72631, Aichtal (DE)**
• **Sparbert, Jan**
**71272, Renningen (DE)**
• **Brichzin, Volker**
**71634, Ludwigsburg (DE)**

(56) Entgegenhaltungen:
**EP-A- 0 313 223      DE-A1- 19 638 511**
**DE-A1- 19 738 764      DE-C1- 19 921 449**
**US-A- 5 913 376      US-A1- 2002 121 989**
**US-A1- 2003 072 471      US-A1- 2003 116 373**
**US-B1- 6 191 704**

**Beschreibung**

Stand der Technik

Die Erfindung betrifft ein Verfahren zur Kursprädiktion und Abstandsregelung in Fahrerassistenzsystemen für Kraftfahrzeuge, bei dem anhand von Informationen aus unterschiedlichen Informationsquellen eine Kurshypothese erstellt wird.

Bei Fahrerassistenzsystemen, die den Fahrer bei der Führung des Fahrzeugs unterstützen und/oder vor akuten Gefahren warnen, automatisch Maßnahmen zur Abwendung einer Kollisionsgefahr einleiten oder Sicherheitssysteme zur Vorbereitung auf die Kollision aktivieren, ist es häufig erforderlich, den voraussichtlichen Kurs des eigenen Fahrzeugs vorherzusagen. Ein typisches Beispiel eines solchen Fahrerassistenzsystems ist ein dynamischer Fahrgeschwindigkeitsregler (ACC; Adaptive Cruise Control), mit dem die Geschwindigkeit des eigenen Fahrzeugs automatisch auf die Geschwindigkeit eines vorausfahrenden Fahrzeugs geregelt wird, das mit Hilfe eines Radar- oder Lidar-Systems geortet wird. Die Kursprädiktion dient dann vor allem zur Entscheidung, ob ein erfaßtes Objekt als Zielobjekt für die Abstandsregelung auszuwählen ist oder ob dieses Objekt ein irrelvantes Objekt, beispielsweise ein Fahrzeug auf einer Nebenspur ist.

Solche ACC-Systeme sind bereits erfolgreich im Einsatz, doch beschränkt sich das Einsatzgebiet bisher zumeist auf Fahrten auf Autobahnen oder gut ausgebauten Landstraßen. In diesen Situationen kann man sich bei der Analyse des Verkehrsumfelds in der Regel auf bewegliche Ziele, beispielsweise auf vorausfahrende Fahrzeuge, beschränken, während Standziele, beispielsweise stehende Objekte am Fahrbahnrand, ignoriert werden können. Zur Vorhersage des eigenen Kurses wird bei solchen Systemen in erster Linie die aktuelle Fahrzeuggeschwindigkeit und die Gierrate des eigenen Fahrzeugs herangezogen. Anhand dieser Daten wird eine Kurshypothese erstellt, indem die Mittellinie des voraussichtlichen Kurses mathematisch als Parabel beschrieben wird, deren Krümmung durch das Verhältnis von Gierrate und Fahrzeuggeschwindigkeit gegeben ist.

Es gibt jedoch Bestrebungen, den Einsatzbereich von ACC-Systemen auf andere Verkehrssituationen zu erweitern, beispielsweise Stop-and-Go-Situationen auf Autobahnen, auf Fahrten auf Landstraßen und letztlich auch auf Fahrten im Stadtverkehr. In diesen Situationen, in denen generell auch Standziele berücksichtigt werden müssen und somit die Auswahl von gültigen Zielobjekten und die Erkennung von Hindernissen wesentlich komplexer ist, werden auch an die Genauigkeit der Kursprädiktion höhere Anforderungen gestellt. Mit einer Parabelnäherung für den voraussichtlichen Kurs bzw. den Fahrbahnverlauf läßt sich die geforderte Genauigkeit im allgemeinen nicht erreichen.

Es ist bereits vorgeschlagen worden, für die Kursprädiktion auch Daten aus anderen Informationsquellen heranzuziehen, beispielsweise die mit Hilfe des Radarsystems erfaßbare Kollektivbewegung anderer Fahrzeuge, Daten aus einem Navigationssystem, Positionsdaten von Standzielen am Fahrbahnrand oder auch Informationen, die von einem Mono- oder Stereo-Videosystem geliefert werden. Die Einbeziehung dieser zusätzlichen Informationen in die Kursprädiktion beruht jedoch bisher auf einem eher kasuistischen Ansatz und verbessert die Kursprädiktion allenfalls in speziellen, eng begrenzten Situationen. Die auf diese Weise erreichbare Genauigkeit und Zuverlässigkeit der Kursprädiktion ist daher für fortgeschrittene Fahrerassistenzsysteme nicht ausreichend.

Aus der geltungs bildenden DE 197 38 764 A1 ist eine Vorrichtung zur grafischen Darstellung einer vorausliegenden Straße, insbesondere zum Einsatz in einem Fahrzeug bekannt, die eine Datenbasis, ein System zur Ermittlung von Fahrzeugpositionen und Fahrtweg, einen die Daten der Datenbasis auswertenden Grafikgenerator und einen mit dem Grafikgenerator verbundenen, die Darstellung zeigenden Bildschirm, aufweist. Es wird die Visualisierung des Straßenverlaufs im Steuerbereich des Fahrzeugs mit Bildschirmtechnik beschrieben, ohne dass der Fahrer von der direkten Beobachtung der Fahrszene nachhaltig abgelenkt wird.

Aus der US 6,191,704 B1 ist ein Fahrzeugumgebungserkennungsapparat bekannt, der eine Bildaufnahmeeinrichtung zur Erkennung der Fahrtrichtung aufweist und der mittels dieses Bildaufnahmesystems Fahrspuren, vorausfahrende Fahrzeuge und stationäre Objekte vor dem eigenen Fahrzeug erkennt und auf Grundlage der Bildinformationen des Bildaufnahmesystems mit Ergebnissen einer Radardetektion verarbeitet und die Ergebnisse auf einer Anzeigeeinrichtung dem Fahrer darbietet.

Aus der US 2002/0121989A1 ist ein Verfahren und ein System bekannt, das dem Fahrer eines Fahrzeugs individuelle Warnungen bereitstellt. Das System verwendet mindestens eine Anwendereinheit und eine Servereinheit, wobei die Servereinheit die Anwendereinheit mit Verkehrswaminformationen versorgt. Die Anwendereinheit umfasst dabei einen Empfänger, eine Einrichtung zur Positionsbestimmung, einen Prozessor, einen Speicher und eine Ausgabeeinrichtung, wobei der Prozessor die Fahrzeugtrajektorie des eigenen Fahrzeugs berechnet und relevante Verkehrswarnungen mit dem eigenen, vorausgesagten Fahrwerk korreliert und den Fahrer gegebenenfalls warnt.

Vorteile der Erfindung

Die Erfindung mit den in Anspruch 1 angegebenen Merkmalen bietet den Vorteil, daß durch eine systematische Integration von Informationen aus mehreren verfügbaren Informationsquellen eine genauere und zuverlässigere Kursprädiktion und Abstandsregelung ermöglicht wird.

Geeignete Informationsquellen zur Extraktion der Rohdaten sind z. B. das bei einem ACC-System ohnehin vorhandene Radarsystem, ein Navigationssystem und/oder ein Mono- oder Stereo-Videosystem. Dementsprechend handelt es sich bei den extrahierten Sätzen von Rohdaten z. B. um die durch Radarortung bestimmten Trajektorien anderer Fahrzeuge, Standziele am Fahrbahnrand, wie Leitplanken und dergleichen, die ebenfalls vom Radarsystem geortet werden können, die vom Navigationssystem bereitgestellten Daten über den Fahrbahnverlauf und/oder der mit Hilfe des Videosystems erkannte Verlauf von Fahrbahnmarkierungen oder sonstigen Fahrbahnbegrenzungen wie Bordsteinkanten und dergleichen. Generell handelt es sich bei diesen Rohdaten also um die Ortskoordinaten von annähernd punktförmigen Einzelobjekten oder Gruppen solcher Objekte, von Linienobjekten oder von komplexeren geometrischen Objekten. Letztlich werden auch die Gruppen von punktförmigen Objekten zu Linienobjekten kombiniert, die Rückschlüsse über den Verlauf der Fahrbahn gestatten.

Das einheitliche Beschreibungssystem zur Repräsentation dieser Sätze von Rohdaten umfaßt ein einheitliches Koordinatensystem zur Repräsentation der Objekte aus verschiedenen Quellen sowie ein System von Regeln, die die aus verschiedenen Quellen stammenden Objekte zueinander in Beziehung setzen und oder mit einander zu identifizieren, so daß man ihr Daten schließlichlich fusionieren kann, indem synthetisch ein neuer Datensatz generiert wird, der die relevanten Informationsgehalte aus den verschiedenen Quellen kombiniert und eine Kurshypothese repräsentiert, die mit hoher Genauigkeit und Verläßlichkeit den Kurs des Fahrzeugs vorhersagt. Insbesondere wird durch die erheblich verbreiterte Informationsbasis eine größere Robustheit der Kursprädiktion in außergewöhnlichen Situationen erreicht.

Vorteilhafte Ausgestaltungen und Weiterbildungen der Erfindung ergeben sich aus den Unteransprüchen.

Zum Beispiel kann eine mögliche Kurshypothese auf folgenden Annahmen beruhen:

Fahrbahnmarkierungen sind Teil einer Fahrspur und können prinzipiell befahren werden. Diese Fahrbahnmarkierungen, etwa in Gestalt eines durchgehenden Randstreifens oder eines durchgehenden oder unterbrochenen Mittelstreifens auf der Fahrbahn, die durch einen geeigneten Algorithmus aus dem Bild eines Mono- oder Stereo-Videosensors extrahiert werden können, geben den Verlauf einer oder mehrerer Fahrspuren an, schließen jedoch nicht aus, daß eine dieser Linien beispielsweise beim Umfahren eines Hindernisses oder beim Abbiegen be- oder überfahren wird.

Hingegen wird durch Randsteine wie Bürgersteigkanten und dergleichen, die vorzugsweise durch geeignete Algorithmen mit Hilfe eines Videosensors detektiert werden können, eine Bereichsgrenze zwischen befahrbaren und nicht befahrbaren Zonen markiert. Kurshypothesen, bei denen diese Bereichsgrenzen überfahren würden, können somit von vornherein verworfen werden.

Dort, wo sich andere Verkehrsteilnehmer in der Vergangenheit bewegt haben, befindet sich prinzipiell auch ein möglicher Kurs für das eigene Fahrzeug. Bei einem ACC-System mit Radar- oder Lidar-Sensorik werden ohnehin die Bewegungen vorausfahrender Fahrzeuge mit einer sogenannten Tracking-Prozedur verfolgt. Die entsprechenden Trajektorien werden daraus generiert, indem eine Anzahl von historischen Positionsdaten (korrigiert um die Eigenbewegung des eigenen Fahrzeugs) mittels eines Polynom-Modells repräsentiert werden, z. B. auch unter Verwendung von Kalmanfiltern.

In heute verfügbaren Navigationssystemen sind Daten über den Fahrbahnverlauf indirekt in Form sogenannter "shape-points" in einer digitalen Karte gespeichert. Aus den shape-points kann durch geeignete Algorithmen die Krümmungsinformation über den Fahrbahnverlauf (in GPS-Koordinaten) relativ zum eigenen Fahrzeug generiert werden. Vorteilhafterweise werden mehrere Navi-Krümmungssegmente generiert. Diese Information läßt sich insbesondere für eine langreichweitige Kursvorhersage nutzen, wenn auch bei den heutigen Systemen die Auflösung der Karte relativ gering ist. Es ist jedoch zu erwarten, daß mit zukünftigen Navigationssystemen auch detailliertere Informationen mit höherer Auflösung bereitgestellt werden, beispielsweise Fahrbahnbreite, Anzahl der Fahrspuren, Einbahnstraßenregelungen und dergleichen.

Sofern die Zielführungsfunktion des Navigationssystems aktiviert ist, kann man im allgemeinen davon ausgehen, daß der Fahrer auch der vom Navigationssystem berechneten Route folgen wird. Wenn sich anhand der Fahrbahnmarkierungen, Randsteine und dergleichen sowie anhand der Routeninformation in der digitalen Karte mehrere Möglichkeiten für den künftigen Kurs des eigenen Fahrzeugs ergeben, läßt sich die vom Navigationssystem berechnete Route dazu nutzen, unter den mehreren Möglichkeiten die richtige oder wahrscheinlichste Kurshypothese auszuwählen.

Stehende Objekte unmittelbar am Fahrzeugrand oder auch in größerem Abstand zur Fahrbahn können mit Hilfe des Videosystems und vielfach auch mit Hilfe des Radarsystems detektiert werden und schränken die Möglichkeiten für erlaubte Kurse des eigenen Fahrzeugs erheblich ein. Dies gilt zunächst auf Landstraßen für Leitplanken, Leitplankenpfosten oder reflektierende Fahrbahnbegrenzungspfähle. Auch im Stadtverkehr können stehende Objekte jedoch zur Bestimmung des Fahrbahnverlaufs sowie zur Identifizierung von nicht überfahrbaren Begrenzungen herangezogen werden. Ein Beispiel ist die Begrenzung der effektiv zur Verfügung stehenden Fahrspur durch eine Reihe am Fahrbahnrand parkender Fahrzeuge. Mit Hilfe eines Videosystems läßt sich auch die räumliche Orientierung solcher Objekte erkennen, so daß anhand einer Reihe von Objekten mit gleicher oder stetig variierender Orientierung auf den Fahrbahnverlauf geschlossen werden kann. So kann beispielsweise in Innenstädten aus der Orientierung von Gebäudefronten rechts und links neben der Straße oft der Straßenverlauf über relativ große Distanzen abgeschätzt werden.

Bei der Fusion der Daten, insbesondere der Daten von Linienobjekten, aus verschiedenen Quellen ist es zweckmäßig, die Qualität der Daten, z. B. das Gütemaß für PolynomKoeffizienten, sowie die Verläßlichkeit der jeweiligen Informationsquelle zu bewerten und zu berücksichtigen. Die Datenfusion bezieht sich indessen nicht nur auf die Zusammenführung von Daten aus verschiedenen Quellen, sondern auch auf das Fortschreiben der bereits früher erfaßten Linienobjekte und der daraus gebildeten Kurshypothesen in Anbetracht des sich während der Fahrt dynamischen ändernden Verkehrsumfelds. Dabei sind auch Übergangsbedingungen wie z. B. Stetigkeit der Fahrbahnkrümmung zu berücksichtigen. Häufig ist auch eine Filterung der in dieser Weise fusionierten Linienobjekte zweckmäßig.

In einem weiteren Schritt werden durch Interpretation der fusionierten Linienobjekte Kurshypothesen gebildet. An Kreuzungen oder Weggabelungen können mehrere Kurshypothesen gebildet werden, unter denen dann in einem weiteren Schritt eine geeignete Auswahl zu treffen ist. Es können auch Hypothesen für Nebenspuren gebildet werden. Eine Klassifizierung der so erzeugten Kurs- und Spurinformationen, z. B. nach dem Kriterium "eigene Spur" oder "Nebenspur", nach Art der Spurbegrenzung und dergleichen erleichtert die spätere Interpretation des Verkehrsgeschehens im Rahmen der eigentlichen ACC-Funktion.

Im Fall mehrerer möglicher Kurshypothesen erfolgt die Auswahl der wahrscheinlichsten Hypothese zweckmäßig anhand der dynamischen Daten des eigenen Fahrzeugs, z. B. anhand des Lenkverhaltens des Fahrers. Ergänzend können auch Informationen wie das Setzen eines Fahrtrichtungsanzeigers oder die Routeninformation des Navigationssystems herangezogen werden.

Zeichnung

Ein Ausführungsbeispiel sowie Funktionsbeispiele der Erfindung sind in den Zeichnungen dargestellt und in der nachstehenden Beschreibung näher erläutert.

Es zeigen:

Figur 1          ein Blockdiagramm zur Illustration des erfindungsgemäßen Verfahrens;

Figur 2          ein Diagramm zur Erläuterung eines in dem Verfahren verwendeten Beschreibungssystems für Linienobjekte;

Figuren 3 bis 6          symbolische Darstellungen von Rohdaten eines Navigationssystems, eines Videosystems und eines Radarsystems für eine spezielle Verkehrssituation;

Figur 7          eine symbolische Darstellung von Kurshypothesen, die durch Fusion der Rohdaten nach Figuren 3 bis 6 gebildet werden; und

Figuren 8 bis 13          Situationsbeispiele zur Erläuterung der Wirkungsweise des erfindungsgemäßen Verfahrens.

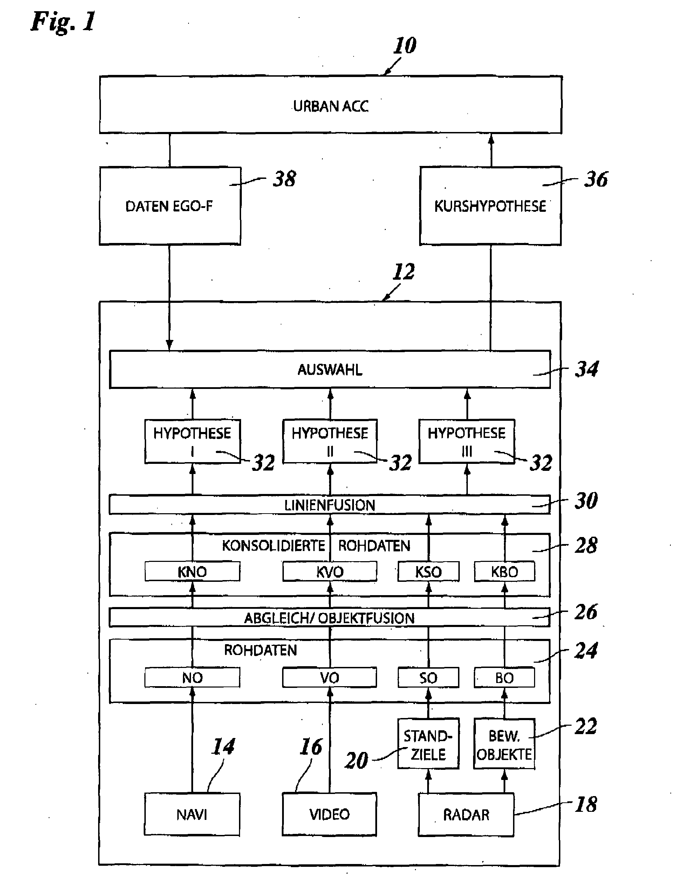

Figur 1 zeigt als Beispiel für ein Fahrerassistenzsystem ein ACC-System 10, das hier als "URBAN ACC" bezeichnet ist, um anzudeuten, daß das System auch für den Stadtverkehr geeignet sein soll. Das ACC-System 10 wird in bekannter Weise durch einen oder mehrere Mikrorechner und zugehörige Software gebildet und ist deshalb nur vereinfacht als Block dargestellt. Auch die zugehörige Sensorik ist in Figur 1 nicht gezeigt. Lediglich die Funktionen des Systems, die sich auf die Kursprädiktion beziehen, sind als gesonderter Block 12 herausgezogen.

Für die Kursprädiktion stehen im gezeigten Beispiel die folgenden Informationsquellen zur Verfügung: ein Navigationssystem 14, ein Videosystem 16 und ein Radarsystem 18, das auch die Daten für die Abstandsregelung im Rahmen der ACC-Funktion liefert. Das Radarsystem 18 ortet sowohl Standziele 20 als auch bewegliche Objekte 22. Die entsprechenden Ortungsdaten werden auf unterschiedliche Weise ausgewertet, so daß die Standziele und die beweglichen Objekte hier als unterschiedliche Informationsquellen behandelt werden.

Aus den insgesamt vier Informationsquellen werden Rohdaten 24 extrahiert. Diese Rohdaten 24 werden mathematisch repräsentiert als geometrische Objekte in einem einheitlichen zweidimensionalen Koordinatensystem. Diese Objekte sind je nach Informationsquelle mit NO, VO, SO, BO bezeichnet. In einer als "Abgleich/Objektfusion" bezeichneten Verfahrensstufe 26 werden die Rohdaten miteinander abgeglichen, um etwaige Widersprüche festzustellen und soweit möglich zu beseitigen und Ungenauigkeiten zu korrigieren, die durch die Natur der jeweiligen Informationsquelle bedingt sind. Dabei können z. B. auch Einzelojekte, die vom Videosystem erkannt wurden, mit entsperechenden Radarzielen identifiziert werden (Objektfusion). Auf diese Weise erhält man konsolidierte Rohdaten 28, die mit KNO, KVO, KSO und KBO bezeichnet sind. Typischerweise repräsentieren diese Daten Linienobjekte wie z. B. den Verlauf von Mittelstreifen und Randmarkierungslinien auf der Fahrbahn (KVO, aus den Videodaten abgeleitet), Fahrbahnränder, die aus Serien von Standzielen abgeleitet sind (KSO, erhalten durch Fusion von Radar- und Videodaten), und Fahrzeugtrajetktorien (KBO, abgeleitet aus Radar- und ggf. Videodaten).

In einem Schritt 30 "Linienfusion" werden dann die Rohdaten für einander entsprechende Objekte zusammengeführt, indem aus den Parametern und Koeffizienten, die die einzelnen Objekte beschreiben, neue synthetische Objekte generiert werden, die jeweils einer denkbaren Kurshypothese 32 entsprechen. Im gezeigten Beispiel werden drei vorläufige Kurshypothesen I - III gebildet. In einem Auswahlschritt 34 wird hieraus die in der jeweiligen Situation wahrscheinlichste Hypothese ausgewählt und als endgültige Kurshypothese 36 an das ACC-System 10 übermittelt. Die Auswahl erfolgt anhand von Daten 38 ("Daten Ego-F") die sich auf das eigene Fahrzeug (Ego-Fahrzeug) beziehen. Beispiele für diese Daten sind die Gierrate oder der Lenkeinschlag oder vergleichbare dynamische Daten, die eine Tendenz des Fahrers anzeigen, den einen oder den anderen Kurs zu wählen, sowie ergänzend Daten über das Setzen des Fahrrichtungsanzeigers (Blinker) und, sofern die Zielführungsfunktion des Navigationssystems 14 aktiv ist, Daten über die berechnete Fahrtroute.

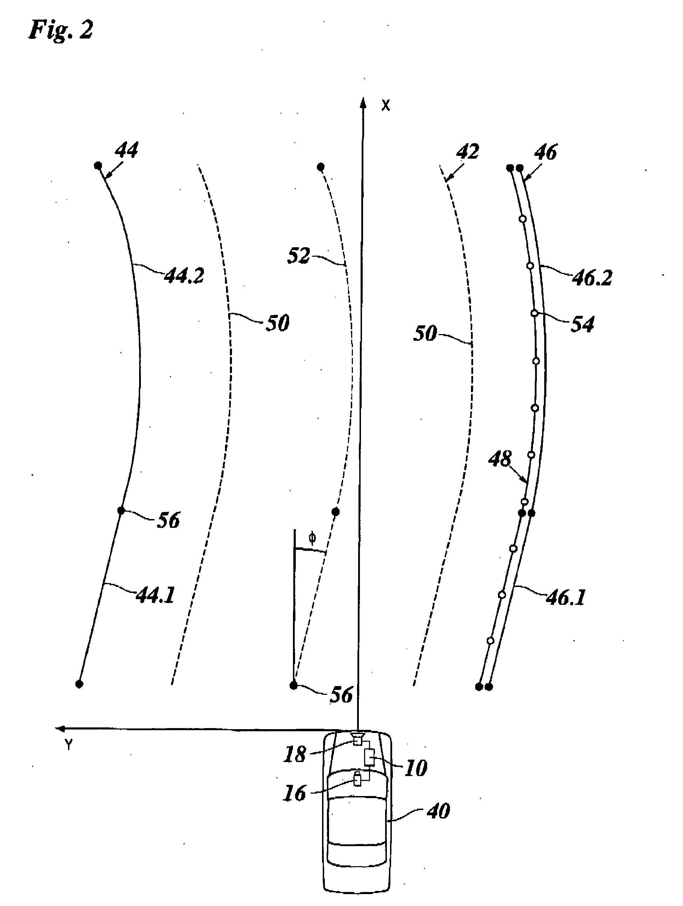

In Figur 2 ist symbolisch das Ego-Fahrzeug 40 dargestellt, das mit dem ACC-System 10 (einschließlich des Blockes 12 und des Navigationssystems 14) sowie mit dem Videosystem 16 und dem Radarsystem 18 ausgerüstet ist. Weiterhin ist ein zweidimensionales Kartesisches Koordinatensystem X-Y gezeigt, das zur mathematischen Beschreibung der als Rohdaten extrahierten geometrischen Objekte dient. Der Ursprung dieses Koordinatensystems wird durch die Front des Ego-Fahrzeugs 40 gebildet. Die X-Achse verläuft in Richtung der aktuellen Längsachse des Fahrzeugs, und die Y-Achse rechtwinklig dazu und parallel zur Fahrbahnebene.

Weiterhin sind in Figur 2 ein Fahrspurobjekt 42 sowie drei Linienobjekte 44, 46 und 48 gezeigt. Das Fahrspurobjekt 42 ist ein schlauchförmiges Gebilde mit linken und rechten Begrenzungslinien 50 und einer Mittellinie 52 und repräsentiert den Verlauf der vom Ego-Fahrzeug 40 befahrenen Fahrspur, die mit Hilfe des Videosystems 16 anhand von Markierungslinien auf der Fahrbahn erkannt wird. Das Linienobjekt 44 repräsentiert beispielsweise den Verlauf einer Bordsteinkante oder einer sonstigen Fahrbahnbegrenzung, die ebenfalls vom Videosystem erkannt wird. Das Linienobjekt 46 repräsentiert eine Leitplanke, die ebenfalls vom Videosystem erkannt wird. Das Linienobjekt 48 repräsentiert die gleiche Leitplanke, diesmal jedoch erkannt anhand einer regelmäßigen Folge von Leitplankenpfosten 54, die vom Radarsystem 18 geortet wurden.

Zur Repräsentation sämtlicher Linienobjekte wird ein einheitliches Beschreibungssystem verwendet, nämlich eine Beschreibung durch Linienstücke, z. B. 44.1, 44.2 und 46.1, 46.2, die durch Ankerpunkte 56 begrenzt sind. Die Linienstücke werden ihrerseits repräsentiert durch Polynome der Form:

$$Y = Y_0 + \tan(\Phi)*(X-X_0) + (1/2)*k*(X-X_0)^2 + (1/6)*dk*(X-X_0)^3$$

Darin ist $X_0$ die X-Koordinate des näher an der Y-Achse gelegenen Ankerpunktes 56, ist der Winkel, den die Tangente an diesen Ankerpunkt mit der X-Achse bildet, und die Koeffizienten k und dk gegen die Linienkrümmung bzw. die räumliche Änderung der Linienkrümmung an.

Für das Fahrspurobjekt 42 wird, bezogen auf dessen Mittellinie 52, dieselbe Polynomdarstellung verwendet:

$$Y = Y_0 \pm (B/2)$$
$$+ \tan(\Phi)*(X-X_0) + (1/2)*k*(X-X_0)^2 + (1/6)*dk(X-X_0)^3$$

Darin ist B die Breite der Fahrspur.

Die Vergleichbarkeit der verschiedenen Objekte wird dadurch weiter erhöht, daß die Ankerpunkte 56 so gewählt werden, daß die einander entsprechenden Ankerpunkte stets die gleiche X-Koordinate haben. So lassen sich dann z. B. die zu derselben Leitplanke gehörenden Linienobjekte 46 und 48 sehr einfach fusionieren, indem einfach für die einander entsprechenden Koeffizienten k und dk und die einander entsprechenden Anfangskoordinaten $Y_0$ der Mittelwert oder ein gewichteter Mittelwert gebildet wird. Bei der Gewichtung kann dem unterschiedlichen Gütemaß der jeweiligen Polynomkoeffizienten sowie den unterschiedlichen Meßgenauigkeiten des Videosystems einerseits und des Radarsystems andererseits Rechnung getragen werden.

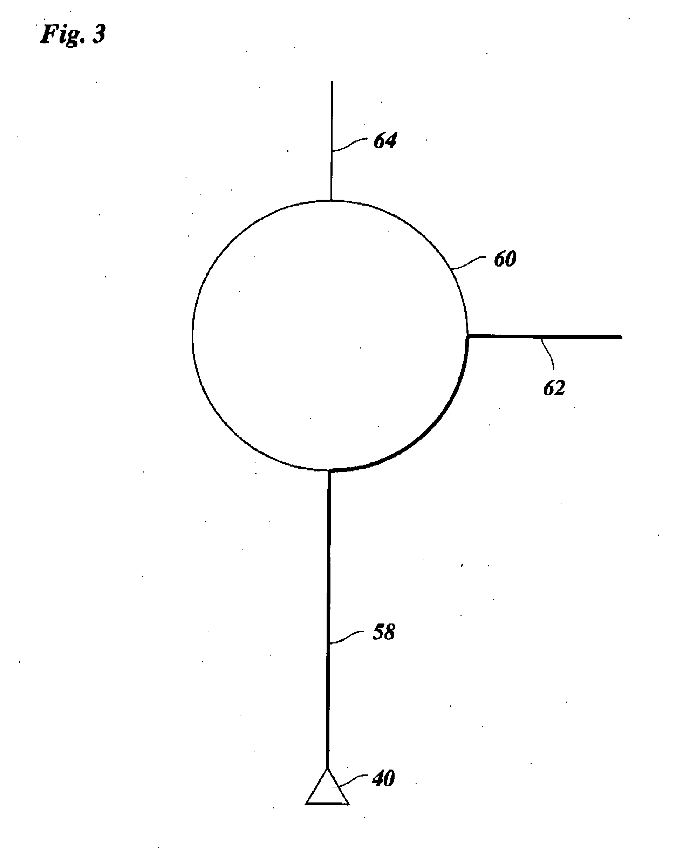

Die Extraktion der Rohdaten, der Abgleich dieser Daten und ihre Fusion soll nun mit Bezug auf Figuren 3 bis 7 anhand eines Beispiels illustriert werden.

Figur 3 zeigt einen Kartenausschnitt, der aus einer Routenkarte des Navigationssystems 14 extrahiert wird, und den Straßenverlauf in dem Bereich angibt, in den das Ego-Fahrzeug 40 gerade einfährt. Man erkennt, daß sich das Fahrzeug auf einer Straße 58 einem Kreisverkehr 60 nähert, von dem zwei weitere Straßen 62, 64 abzweigen. Die vom Zielführungssystem des Navigationssystems berechnete Route ist fett eingezeichnet. Das Navigationssystem empfiehlt demnach ein Einbiegen in die Straße 62.

Obgleich die mit den heute verfügbaren Navigationssystemen erhältlichen Daten nur eine geringe Auflösung haben und relativ detailarm sind, erleichtert die vom Navigationssystem gelieferte Information die Interpretation der Rohdaten, die vom Videosystem und vom Radarsystem geliefert werden. Beispielsweise kann das Bildverarbeitungssystem des Videosystems in dieser Situation die Anweisung erhalten, nach typischen Signaturen für einen Kreisverkehr zu suchen, beispielsweise nach einer Insel auf der Fahrbahnmitte, nach Verkehrsschildern, die auf den Kreisverkehr hinweisen, und dergleichen.

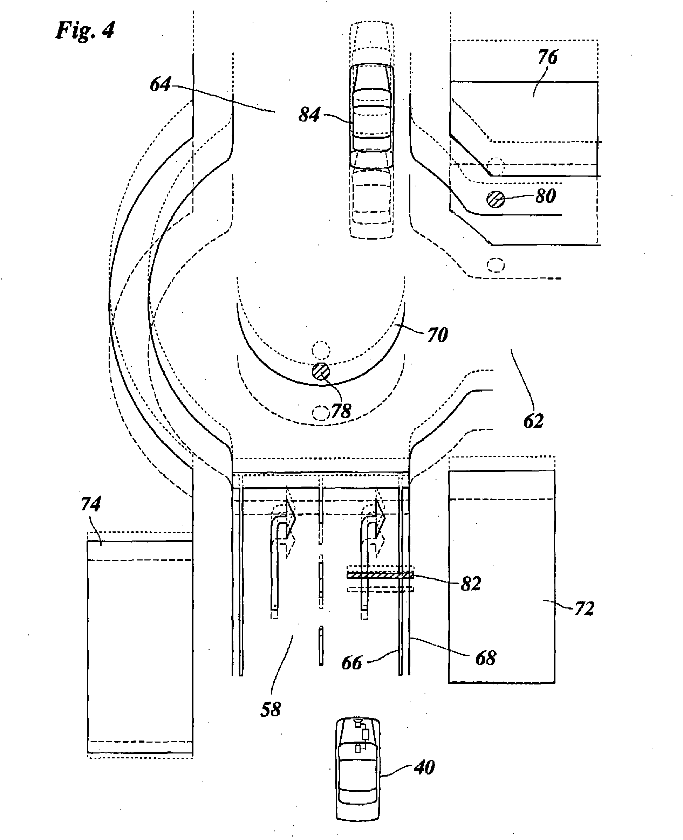

Figur 4 zeigt in durchgezogenen Linien die Informationen, die in der in Figur 3 betrachteten Situation aus dem Videosystem extrahierbar sind. Man erkennt z. B. Fahrbahnmarkierungen 66 auf der Straße 58, Fahrbahnbegrenzungen 68 (beispielsweise Randsteine) für die Straßen 58, 62 und 64, den Kreisverkehr und, teilweise, die Insel 70, außerdem Gebäude 72, 74 und 76, Verkehrsschilder 78, 80, eine Baustellenabsperrung 82 auf der rechten Spur der Straße 58 und schließlich ein Fahrzeug 84, das den Kreisverkehr auf der Straße 64 verläßt.

Aufgrund dieser Daten in Verbindung mit der Kenntnis, daß es sich um einen Kreisverkehr handelt, lassen sich einigermaßen realitätsnahe Fahrspurobjekte konstruieren, beispielsweise anhand der Fahrbahnbegrenzungen 68, die im Fall der Straße 58 noch mit den Fahrbahnmarkierungen 66 fusioniert werden können (genauer: Fusion der Mittellinien). Allerdings ist bei einem Mono-Videosystem die Genauigkeit der X-Koordinaten der Objekte nur sehr gering, und auch bei einem Stereo-Videosystem nimmt die Genauigkeit dieser Koordinate mit wachsendem Abstand beträchtlich ab. Dies wird in Figur 4 dadurch symbolisiert, daß die oberen und unteren Toleranzgrenzen für die verschiedenen Objekte punktiert bzw. gestrichelt eingezeichnet sind. Eine genaue Kursprädiktion allein anhand der Videodaten wäre deshalb trotz großer Detailfiille kaum möglich.

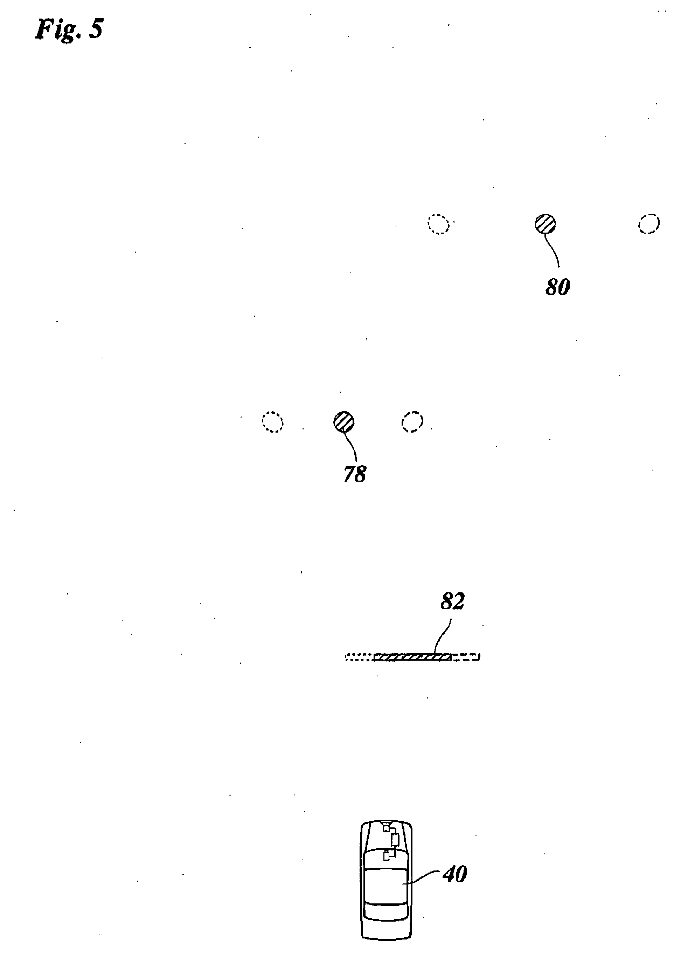

Figur 5 zeigt die Rohdaten SO, die sich aus dem Radarsystem 18 extrahieren lassen und sich auf Standziele beziehen. Erkannt werden hier vor allem Objekte aus Metall, die die Radarstrahlen gut reflektieren, also die Verkehrsschilder 78, 80 und die Baustellenabsperrung 82. Aufgrund der begrenzten Winkelauflösung des Radarsensors ist hier die Y-Koordinate relativ ungenau, was wieder durch punktiert bzw. gestrichelt eingezeichnete Toleranzgrenzen symbolisiert wird.

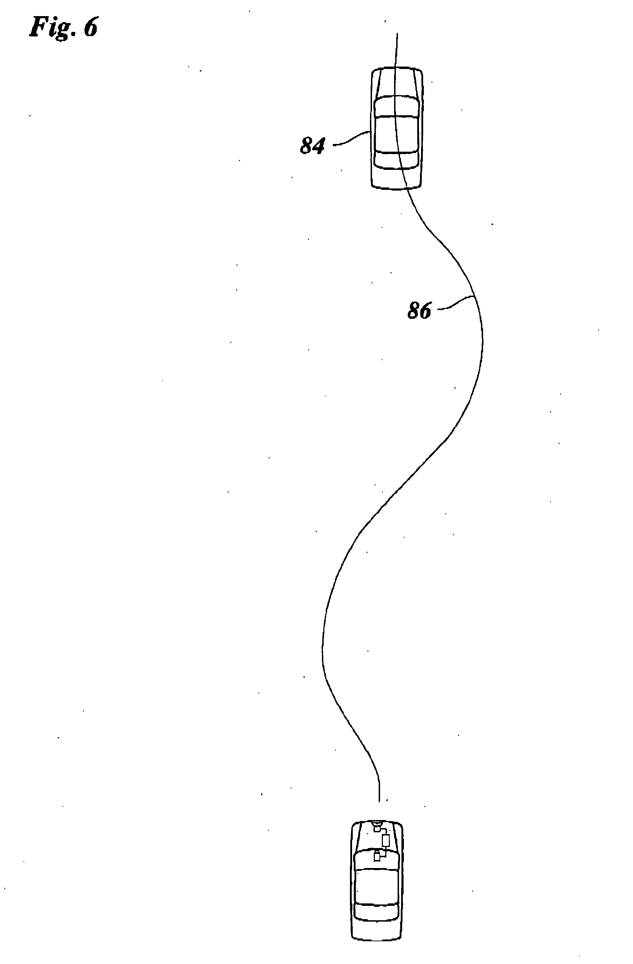

Figur 6 zeigt schließlich die Rohdaten BO, die das Radarsystem 18 für bewegliche Objekte liefert. Dies sind das Fahrzeug 84 und die Trajektorie 86, die dieses Fahrzeug in der Vergangenheit zurückgelegt hat. Auch diese Trajektorie läßt sich in dem in Figur 2 illustrierten Beschreibungssystem repräsentieren.

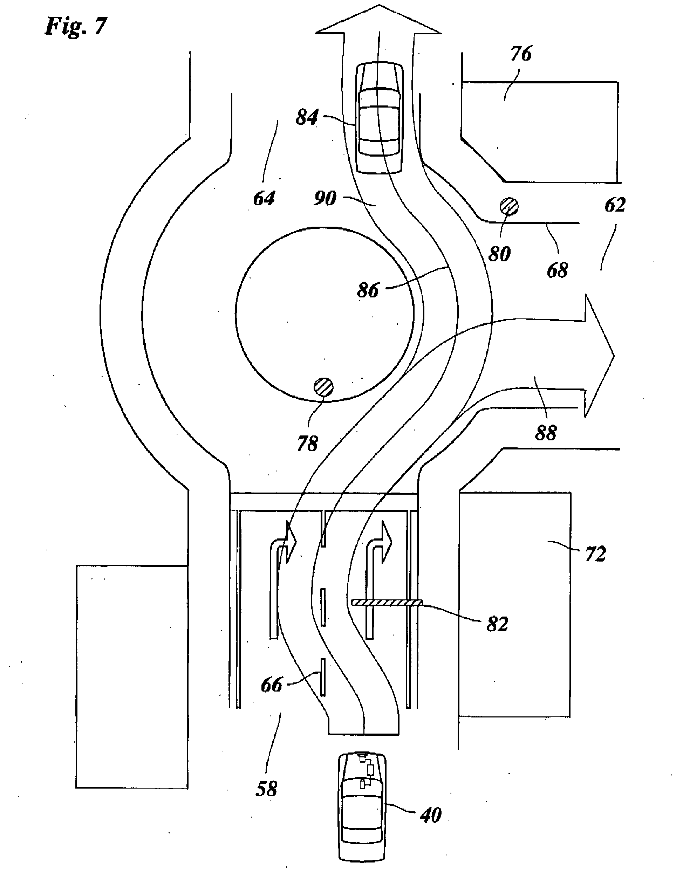

Figur 7 zeigt nun die Information, die sich durch Abgleich und Fusion der in Figuren 3 bis 6 illustrierten Daten gewinnen läßt. Da die Verkehrsschilder 78 und 80 sowohl vom Videosystem als auch vom Radarsystem erkannt werden, lassen sich durch Abgleich der entsprechenden Ortskoordinaten die in Figuren 4 und 5 dargestellten Ungenauigkeiten erheblich einschränken, indem die X-Koordinaten der vom Videosystem erkannten Objekte an den genaueren X-Koordinaten der Radarobjekte geeicht werden und umgekehrt für die Y-Koordinate. Auf diese Weise erhält man nun als konsolidierte Rohdaten insbesondere den genauen Verlauf der Fahrbahnbegrenzungen 68. Daraus ließen sich dann, wenn man die Baustellenabsperrung 82 zunächst außer Acht läßt, zwei mögliche Kurshypothesen ableiten, die einerseits einem Einbiegen in die Straße 62 und andererseits einer Weiterfahrt auf der Straße 64 entsprechen.

Die Baustellenabsperrung 82 stellt jedoch ein Hindernis dar, das eine besondere Behandlung erfordert. Aus der Trajektorie 86 des Fahrzeugs 84 läßt sich schließen, daß dieses Hindernis umfahrbar ist. Allerdings zeigt ein Abgleich mit der vom Videosystem erkannten Fahrbahnmarkierung 66, daß dabei die Mittellinie der Straße 58 überfahren werden muß. Dies ist gefahrlos nur dann möglich, wenn Gegenverkehr ausgeschlossen werden kann. Im gezeigten Beispiel enthält die Fahrbahnmarkierung 66 jedoch auch Abbiegepfeile, die vom Videosystem erkannt werden können und hier den Schluß zulassen, daß die Straße 58 eine Einbahnstraße ist. So ist es schließlich möglich, die beiden bereits erwähnten Kurshypothesen so zu modifizieren, daß die Baustellenabsperrung 82 umfahren wird. Die so erhaltenen Kurshypothesen sind repräsentiert durch Fahrschläuche (Fahrspurobjekte) 88, 90, deren Mittellinie jeweils der voraussichtlichen Trajektorie des Ego-Fahrzeugs 40 entspricht und deren Breite geeignet gewählt ist, jedenfalls größer als die Breite des Ego-Fahrzeugs 40 und kleiner oder gleich der Breite einer einzelnen Fahrspur.

Die Breite der Straße 62 läßt sich selbst dann sich relativ genau abschätzen, wenn weder eine Fahrbahnmarkierung noch die Fahrbahnbegrenzung 68 am gegenüberliegenden Straßenrand zu erkennen ist. Die Abschätzung beruht dann auf der plausiblen Annahme, daß das Verkehrsschild 80 unmittelbar am Fahrbahnrand steht. Auch ohne das Verkehrsschild bilden die Koordinaten der erkennbaren Fronten der Gebäude 76 und 72 einen Anhaltspunkt, in Verbindung mit einer plausiblen Annahme für die Breite der Bürgersteige. Aus der so abgeschätzten Breite der Straße 62 läßt sich dann schließen, daß es sich höchstens um eine zweispurige Straße handeln kann, so daß die Breite des Fahrschlauches 88 höchstens die Hälfte der Straßenbreite betragen darf.

Unter den beiden möglichen Kurshypothesen, repräsentiert durch die Fahrschläuche 88 und 90, wird dann durch eine geeignete Situationsanalyse diejenige ausgewählt, für die der Fahrer sich entscheidet, sobald erste Anzeichen für diese Entscheidung erkennbar sind. Im hier betrachteten Beispiel kann diese Entscheidung unmittelbar anhand des Routenvorschlags des Navigationssystems (Figur 3) getroffen werden.

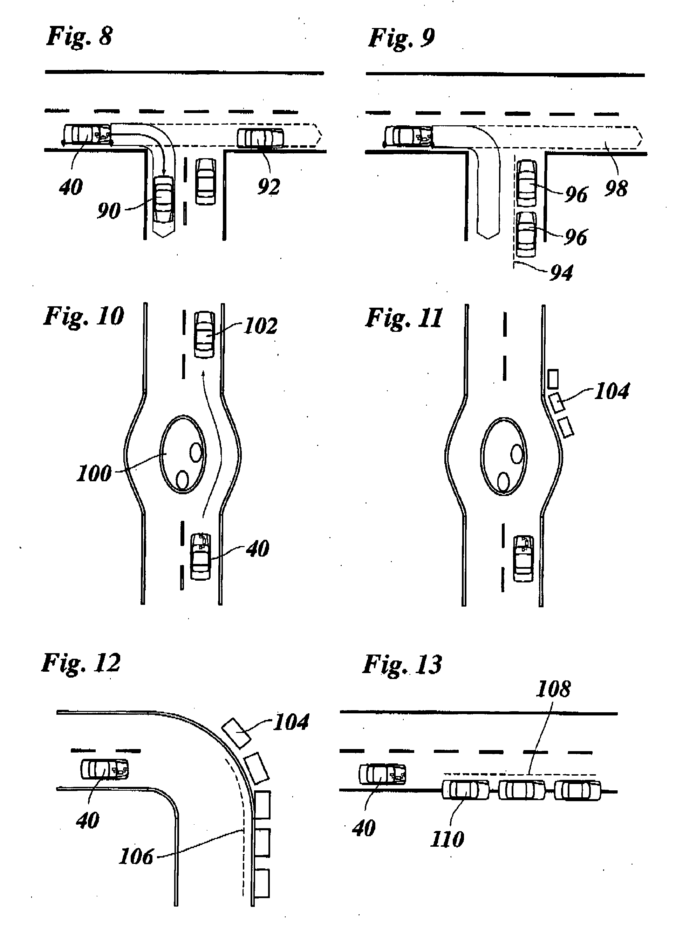

Anhand der Figuren 8 bis 13 werden nun einige weitere Fallbeispiele erläutert.

Figur 8 illustriert einen Abbiegevorgang des Ego-Fahrzeugs 40, das ein vorausfahrendes Fahrzeug 90 als Zielobjekt verfolgt. Das entsprechende Fahrspurobjekt kann dann unmittelbar aus der Trajektorie des Fahrzeugs 90 gebildet werden. Die Verfolgung eines weiteren Fahrzeugs 92 sowie eine Analyse der Fahrbahnmarkierungen und Fahrbahnbegrenzungen zeigt jedoch, daß alternativ auch eine andere Kurshypothese möglich wäre, nämlich entsprechend einer Geradeausfahrt mit Verfolgung des Fahrzeugs 92 als neues Zielobjekt. Eine frühzeitige Entscheidung wird hier durch das Setzen des Fahrtrichtungsanzeigers am Ego-Fahrzeug 40 ermöglicht. Andernfalls könnte die Entscheidung erst dann getroffen werden, wenn der Fahrer durch einen Lenkeinschlag die Abbiegewunsch zu erkennen gibt.

Figur 9 illustriert einen ähnlichen Abbiegevorgang, wobei hier jedoch kein Zielobjekt verfolgt wird. Auch wenn auf der nach rechts abzweigenden Straße keine Fahrbahnmarkierungen zu erkennen sind, läßt sich die Fahrspurgrenze 94 hier anhand der seitlichen Begrenzungen zweier hintereinander haltender Fahrzeuge 96 bestimmen. Dabei ermöglicht das Radarsystem eine genaue Abstandsmessung, und das Videosystem erlaubt es, die einheitliche Ausrichtung der beiden Fahrzeuge 96 zu verifizieren. Die alternative Kurshypothese (Fahrschlauch 98) ist anhand der Fahrbahnmarkierungen und/oder Fahrbahnbegrenzungen erkennbar.

In Figur 10 nähert sich das Ego-Fahrzeug 40 einer umfahrbaren Verkehrsinsel 100. Die Kurshypothese beruht auf der Trajektorie eines Vorderfahrzeugs 102, kombiniert mit der Erkennung von Fahrbahnmarkierungen und/oder -begrenzungen.

In Figur 11 steht in der gleichen Situation kein Vorderfahrzeug zur Verfügung. Die Erkennung von dicht beieinanderstehenden Hindernissen 104 am Fahrbahnrand erlaubt hier jedoch den Schluß, daß keine alternative Kurshypothese zur Verfügung steht. Durch Analyse der Videodaten ist außerdem eine weitgehend einheitliche Orientierung der der Straße zugewandten Fronten dieser Hindernisse 104 erkennbar, und unter einer plausiblen Annahme für den Abstand dieser Hindernisse zum Fahrbahnrand läßt sich ein Fahrspurobjekt und daraus die Kurshypothese konstruieren.

In Figur 12 fährt das Ego-Fahrzeug 40 in Freifahrt (ohne Vorderfahrzeug) in eine enge Kurve ein. Auch wenn die Fahrbahnbegrenzungen nicht direkt erkennbar sind, erlaubt eine Reihe von Hindernissen 104 am gegenüberliegenden Fahrbahnrand, die mit Hilfe des Radarsystems und/oder Videosystems detektierbar sind, den Schluß auf einen gekrümmten Fahrbahnverlauf sowie eine Abschätzung der Fahrbahngrenze 106. Eine denkbare alternative Kurshypothese bestünde hier darin, daß die Fahrbahn geradlinig weiter verläuft und es sich bei den Hindernissen 104 um stehende Hindernisse auf der Fahrbahn handelt. Eine Entscheidung ist spätestens dann möglich, wenn der Fahrer bei Einfahrt in die Kurve mit dem Lenkmanöver beginnt.

Figur 13 illustriert eine Freifahrtsituation auf gerader Fahrbahn. Eine effektive Fahrspurgrenze 108 wird hier durch eine Reihe am Straßenrand parkender Fahrzeuge 110 definiert. Anhand der Daten des Radarsystems sind die Fahrzeuge 110 eindeutig als stehende Objekte zu identifizieren. Das Videosystem erlaubt die Erkennung der Orientierung der Fahrzeuge und die genaue Bestimmung der Lage der seitlichen Begrenzung. Wenn mit Hilfe des Videosystems zusätzlich die Fahrbahnmarkierung (Mittelstreifen) erkannt werden kann, läßt sich entscheiden, ob ein Ausweichen möglich ist, ohne die Gegenspur zu befahren. Falls die Gegenspur benutzt werden muß, läßt sich anhand der Daten des Navigationssystems verifizieren, daß die Fahrbahn geradlinig weiterläuft und keine Einmündungen vorhanden sind, so daß Gegenverkehr zuverlässig ausgeschlossen werden kann.

**Patentansprüche**

1. Verfahren zur Kursprädiktion und Abstandsregelung in Fahrerassistenzsystemen für Kraftfahrzeuge (40), bei dem anhand von Informationen aus unterschiedlichen Informationsquellen (14,16,18) eine Kurshypothese (36) erstellt wird, wobei als Informationsquellen ein Radar- oder Lidar-System (18), ein Videosystem (16) und/oder ein Navigationssystem (14) vorgesehen sind, wobei die folgenden Schritte ausgeführt werden:

    - Extraktion je eines Satzes von Rohdaten (24) für die Kurshypothese aus jeder Informationsquelle,
    - Repräsentation der verschiedenen Sätze von Rohdaten (24) in einem einheitlichen Beschreibungssystem, und
    - Fusion der Rohdaten zur Bildung der Kurshypothese (36), indem die Rohdaten, die einander entsprechende Objekte aus verschiedenen Datenquellen repräsentieren, zur Verbesserung der Genauigkeit und zur Plausibilitätsprüfung miteinander abgeglichen werden,

**dadurch gekennzeichnet, dass**

    - durch Fusion der Rohdaten (24) zunächst mehrere mögliche Kurshypothesen (32) generiert werden, aus denen dann durch Situationsanalyse anhand dynamischer Daten des eigenen Fahrzeugs (40) und/oder anhand von Zusatzinformationen wie Setzen des Fahrrichtungsanzeigers oder Routenvorschlag des Navigationssystems die endgültige Kurshypothese (36) ausgewählt wird und die endgültige Kurshypothese (36) an das Fahrerassistenzsystem ausgegeben wird, das die Geschwindigkeit des Kraftfahrzeugs (40) zur Abstandsregelung regelt, wobei ein dabei berücksichtigtes, von dem Radar- oder Lidarsystem (18) geortetes Objekt aufgrund der endgültigen Kurshypothese (36) ausgewählt wird.

2. Verfahren nach Anspruch 1, **dadurch gekennzeichnet, daß** zu den Rohdaten (24) Linienobjekte (44, 46, 48) gehören, die aus Linienstücken (44.1, 44.2; 46.1, 46.2) zusammengesetzt sind, und das jedes Linienstück durch ein Polynom repräsentiert wird, wobei die Polynome für sämtliche Linienstücke dieselbe Form haben.

3. Verfahren nach Anspruch 2, **dadurch gekennzeichnet, daß** die Linienstücke durch Polynome dritten Grades repräsentiert werden.

4. Verfahren nach Anspruch 2 oder 3, **dadurch gekennzeichnet, daß** die Fusion der Rohdaten im Falle von Linienstücken (46, 48) die Erzeugung eines neuen Polynoms einschließt, dessen Koeffizienten aus den Koeffizienten der die Rohdaten repräsentierenden Polynome berechnet werden.

5. Verfahren nach einem der vorstehenden Ansprüche, **dadurch gekennzeichnet, daß** die Rohdaten (24) nach verschiedenen Objekttypen klassifiziert werden, beispielsweise nach Einzelobjekten (78, 80) und Linienobjekten (44, 46, 48) und/oder, im Falle von Linienobjekten, nach Fahrbahnmarkierungen (66) und nicht überfahrbaren Fahrbahnbegrenzungen (68).

6. Verfahren nach einen der vorstehenden Ansprüche, **dadurch gekennzeichnet, daß** aus Serien von Einzelobjekten (104; 110), insbesondere solchen mit einheitlicher Orientierung, Linienobjekte (106; 108) synthetisiert werden.

7. Verfahren nach einem der vorstehenden Ansprüche, **dadurch gekennzeichnet, daß** die Rohdaten Trajektorien (86) von anderen Fahrzeugen (84) umfassen.

**Claims**

1. Method for predicting the course and for carrying out distance control in driver assistant systems for motor vehicles (40), in which method a course hypothesis (36) is produced on the basis of information from different information sources (14, 16, 18), wherein a radar system or lidar system (18), a video system (16) and/or a navigation system (14) are provided as information sources, wherein the following steps are carried out:

    - extraction of in each case one set of raw data (24) for the course hypothesis from each information source,
    - representation of the various sets of raw data (24) in a uniform description system, and
    - fusion of the raw data for forming the course hypothesis (36) by reconciling with one another the raw data which represent objects which correspond to one another from different data sources, in order to improve the accuracy and to check the plausibility,

    **characterized in that**

    - by fusing the raw data (24), firstly a plurality of possible course hypotheses (32) are generated, from which the ultimate course hypothesis (36) is then selected by situation analysis by means of dynamic data of the driver's own vehicle (40) and/or by means of additional information such as setting the direction of travel indicator or a route proposal of the navigation system, and the ultimate course hypothesis (36) is output to the driver assistant system which controls the speed of the motor vehicle (40) for the purpose of distance control, wherein an object which is taken into account and whose location is determined by the radar or lidar system (18) is selected on the basis of the ultimate course hypothesis (36).

2. Method according to Claim 1, **characterized in that** linear objects (44, 46, 48), which are composed of linear elements (44.1, 44.2; 46.1, 46.2), are associated with the raw data (24), and **in that** each linear element is represented by a polynomial, wherein the polynomials for all the linear elements have the same shape.

3. Method according to Claim 2, **characterized in that** the linear elements are represented by third-degree polynomials.

4. Method according to Claim 2 or 3, **characterized in that** in the case of linear elements (46, 48) the fusion of the raw data includes the generation of a new polynomial whose coefficients are calculated from the coefficients of the polynomials which represent the raw data.

**5.** Method according to one of the preceding claims, **characterized in that** the raw data (24) are classified according to various object types, for example according to individual objects (78, 80) and linear objects (44, 46, 48) and/or, in the case of linear objects, according to carriageway markings (66) and carriageway boundaries (68) which cannot be travelled over.

**6.** Method according to one of the preceding claims, **characterized in that** linear objects (106; 108) are synthesized from series of individual objects (104; 110), in particular those with uniform orientation.

**7.** Method according to one of the preceding claims, **characterized in that** the raw data comprise trajectories (86) of other vehicles (84).


**Revendications**

**1.** Procédé de prédiction de trajectoire et de régulation de distance pour des systèmes d'assistance au conducteur de véhicules automobiles (40), dans lequel une hypothèse de trajectoire (36) est établie à l'aide d'informations provenant de différentes sources d'informations (14, 16, 18), les sources d'informations prévues étant un système radar ou lidar (18), un système vidéo (16) et/ou un système de navigation (14), le procédé présentant les étapes suivantes :

- extraction dans chaque source d'informations d'un jeu de données brutes (24) pour l'établissement de l'hypothèse de trajectoire,
- représentation des différents jeux de données brutes (24) dans un système descriptif unitaire et
- fusion des données brutes pour former l'hypothèse de trajectoire (36) en comparant les unes aux autres les données brutes qui représentent des objets mutuellement correspondants et qui proviennent des différentes sources de données, pour améliorer leur précision et vérifier leur plausibilité,

**caractérisé en ce que**

- par fusion de données brutes (24), on forme d'abord plusieurs hypothèses possibles de trajectoire (32) à partir desquelles, par analyse de la situation à l'aide de données dynamiques du véhicule (40) propre et/ou à l'aide d'informations supplémentaires, par exemple le placement d'un afficheur de direction de déplacement ou une proposition d'itinéraire du système de navigation, l'hypothèse finale de trajectoire (36) est sélectionnée et l'hypothèse finale de trajectoire (36) est délivrée au système d'assistance au conducteur qui régule la vitesse du véhicule automobile (40) en vue de réguler la distance, un objet pris en compte et localisé par le système radar ou lidar (18) étant sélectionné sur base de l'hypothèse finale de trajectoire (36).

**2.** Procédé selon la revendication 1, **caractérisé en ce que** des objets linéaires (44, 46, 48) constitués de l'assemblage d'éléments linéaires (44.1, 44.2; 46.1, 46.2) font partie des données brutes (24) et **en ce que** chaque élément linéaire est représenté par un polynôme, les polynômes ayant la même forme pour tous les éléments linéaires.

**3.** Procédé selon la revendication 2, **caractérisé en ce que** les éléments linéaires sont représentés par des polynômes du troisième degré.

**4.** Procédé selon les revendications 2 ou 3, **caractérisé en ce que** dans le cas d'éléments linéaires (46, 48), la fusion des données brutes inclut la formation d'un nouveau polynôme dont les coefficients sont calculés à partir des coefficients des polynômes qui représentent les données brutes.

**5.** Procédé selon l'une des revendications précédentes, **caractérisé en ce que** les données brutes (24) sont classées en différents types d'objets, par exemple objets ponctuels (78, 80) et objets linéaires (44, 46, 48) et/ou, dans le cas d'objets linéaires, en marquages (66) de la bande de circulation et en limites (68) de la bande de circulation qui ne peuvent être traversées.

**6.** Procédé selon l'une des revendications précédentes, **caractérisé en ce que** des objets linéaires (106; 108) sont synthétisés à partir de séries d'objets distincts (104; 110), en particulier d'objets qui présentent une orientation commune.

**7.** Procédé selon l'une des revendications précédentes, **caractérisé en ce que** les données brutes comprennent les trajectoires (86) d'autres véhicules (84).

**Fig. 1**

**Fig. 2**

*Fig. 3*

*Fig. 4*

64

84

76

80

70

78

62

74

58

82

72

66

68

40

*Fig. 5*

80

78

82

40

**Fig. 6**

*Fig. 7*

*Fig. 8*

40
90
92

*Fig. 9*

96
98
96
94

*Fig. 10*

102
100
40

*Fig. 11*

104

*Fig. 12*

104
40
106

*Fig. 13*

108
40
110

**EP 1 684 142 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19738764 A1
- US 6191704 B1
- US 20020121989 A1